# EUROPEAN PATENT APPLICATION

(11) **EP 4 825 275 A1**
(43) Date of publication of application: **21.10.2026**
(21) Application number: 26171560.1
(22) Date of filing: 10.04.2026
(51) Int. Cl.: A47J 31/36, A47J 31/40, A47J 31/34, A47J 31/44

(54) **DEVICE FOR PREPARING BEVERAGES USING A CAPSULE**

(30) Priority: 17.04.2025 CZ 20250171
(71) Applicant: Global Outsorcing Solutions, s.r.o., 19000 Praha 9, Vysocany (CZ)
(72) Inventor: Dvoracek, Jiri, 67801 Blansko (CZ); Urban, Miroslav, 67905 Krtiny (CZ)
(74) Representative: Dadej, Leopold

(57) **Abstract**

A device for the preparation of beverages using a capsule (4) that comprises a body (5) of the apparatus and a holder (1) for the placement of the capsule (4), which is movably connected to the body (5) of the apparatus. The body (5) of the apparatus comprises an injection element (52), and the holder (1) comprises a discharge element (36), wherein the line defined in the direction of the injection of the liquid into the capsule (4) and the line defined in the direction of the discharge of the liquid from the capsule (4) are non-parallel. The holder (1) comprises a first member (2) comprising a space (21) for housing the capsule (4) and a second member (3) comprising the discharge element (36). The first member (2) and the second member (3) are movable relative to each other between a first position and a second position. In the first position, the discharge element (36) does not extend into the space (21) for housing the capsule (4), and in the second position, the discharge element (36) does extend into the space (21) for housing the capsule (4).

## Description

### Technical Field

The invention falls within the field of technology for gastronomy, specifically within the field of devices for the automated preparation of beverages.

### Background of the Invention

In the current state of the art, devices for automatic preparation of beverages, for example coffee or mixed beverages are known. Some of these devices use capsules comprising ingredients or flavorings for the preparation of beverages. These devices typically comprise reservoirs for liquids, a space for the insertion of the capsule, and a mechanism for guiding liquids, injection, and discharge of liquids from the capsule.

The document US20230397753 A1 describes a device for the production of mixed beverages using a capsule, where by snapping a lid the capsule is pierced, injection occurs, and subsequently the liquid is discharged from the capsule in a vertical direction.

The document WO2018109574 A1 describes a device for production of beverages - especially coffee, where the capsule is inserted into a sliding holder. After sliding the holder into the apparatus, the capsule is pierced by snapping a lever, also in a vertical direction.

The disadvantages of the current state of the art lie in the design of the injection and discharge mechanism. The injection and discharge elements are often oriented in the same direction, which may hinder the perfect mixing of the ingredients. Further, the piercing of the capsule often requires the use of an additional moving element, for example a lever, which may complicate the operation of the apparatus and increase the risk of structural failures. Therefore, it would be preferable to come up with a solution of a capsule piercing mechanism that would be effective in terms of mixing the beverage, as well as simple and practical in terms of operation and design.

### Summary of the Invention

The shortcomings of the solutions from the state of the art are to a certain extent eliminated by a device for the preparation of beverages using a capsule. This device comprises a body of the apparatus and a holder for the placement of the capsule that is movably connected to the body of the apparatus. The body of the apparatus comprises an injection element for the injection of a liquid into the capsule, and the holder comprises a discharge element for the discharge of the liquid from the capsule, wherein the line defined in the direction of the injection of the liquid into the capsule and the line defined in the direction of the discharge of the liquid from the capsule are non-parallel.

The holder comprises a first member comprising a space for housing the capsule and a second member with the discharge element. The first member or the second member comprises a chamfer of the holder, and the body of the apparatus comprises a chamfer of the body for contact with the chamfer of the holder.

The first member and the second member are connected by a movable connection and are movable relative to each other between a first position and a second position. In the first position, the discharge element does not extend into the space for housing the capsule, and in the second position, the discharge element does extend into the space for housing the capsule.

The device according to the present invention may, for example, be a device for the automatic preparation of alcoholic and non-alcoholic mixed beverages. The device may comprise several reservoirs for different kinds of alcohol and a reservoir for water. The reservoirs may be connected to conduit for guiding the liquids. The conduit may be produced from flexible plastic pipes and may be terminated with an injection element, for example a needle. The apparatus for the preparation of beverages preferably uses capsules containing a liquid, gel, or powdered mixture with additives specific to the selected beverages, for example sweeteners, flavors, fruit juices, seasonings, etc. The capsule is preferably inserted into the corresponding space in the device; the selected liquids from the reservoirs are guided through the conduit and the injection element into the capsule, where they are mixed with its content and subsequently discharged out of the capsule, resulting in the final beverage.

The device according to the present invention comprises the body of the apparatus and a holder of the capsule. The body of the apparatus preferably forms its main, stable part, to which the reservoirs for liquids are connected. The holder is designed for the placement of the capsule and comprises a corresponding space for housing the capsule, for example a capsule-shaped recess. The space for housing the capsule comprises at least one opening for the injection element for access of the injection element to the capsule and at least one opening for the discharge element for access of the discharge element to the capsule. The body and the holder may be produced from a rigid and durable material, for example plastic. The holder is movably connected to the body of the apparatus, this movable connection is preferably slidable and non-rotatable. The holder is therefore preferably designed in the form of a drawer that slides out of and into the body of the apparatus. This slidable connection may be implemented, for example, using sliding runners, groove guides, sliding rods, etc. This design offers the advantage of easy operation and cleaning of the holder.

Preferably, the holder is connected to the body of the apparatus slidably and non-rotatably.

The device preferably comprises a limit switch that is activated when the holder slides into the fully slid-in position within the body of the apparatus. The activation of the limit switch preferably allows the opening of valves for liquid supply into the capsule. If the holder is not slid completely into the body of the apparatus, the limit switch is not activated and the valves for liquid supply into the capsule are blocked.

The body of the apparatus comprises the injection element, and the holder comprises the discharge element. The liquid from the reservoirs may therefore be preferably guided through the conduit inside the body of the apparatus. This conduit may open into the injection element, which is preferably protruding partially from the body of the apparatus at the point where the holder is slid in. In this way, the liquids may be guided from the reservoirs into the capsule placed in the holder. The holder comprises the discharge element used to discharge the liquids out of the capsule. The injection element and the discharge element may be, for example, small pipes or sharp elements, such as needles.

The line defined in the direction of the injection of the liquid into the capsule and the line defined in the direction of the discharge of the liquid from the capsule are non-parallel. This means that the direction of the injection of the liquid into the capsule and the direction of the discharge of the liquid from the capsule are different. For example, if the injection element and the discharge element are needles, these needles are non-parallel, meaning they form a certain angle with each other. Preferably, this angle is at least 20°; more preferably, this angle is 90°. For example, the direction of the injection of the liquid into the capsule may be horizontal, while the direction of the discharge of the liquid from the capsule may be vertical. The different directions of injection and discharge may contribute to thorough mixing of liquids inside the capsule by a swirling motion.

The holder comprises a first member, which comprises a space for placement of the capsule, and a second member, which comprises the discharge element. These two members are movable relative to each other between a first and a second position. Preferably, the first member is connected to the body of the apparatus slidably, for example, using a rail guide. The second member is then movably connected to the first member, preferably, for example, by means of a spring connection using return springs. The first member is movable relative to the body of the apparatus, and the second member is movable relative to the body of the apparatus and also relative to the second member. In the first position, the first member and the second member are preferably spaced apart, and the return springs are tensioned in the initial position. In the second position, the first member and the second member are preferably brought closer together, preferably touching at least part of their surfaces, and the return springs are compressed.

Preferably, the first member, with the space for the placement of the capsule, is located on the top side of the holder, and the second member, with the discharge element, is located on the bottom side of the holder.

Alternatively, the second member of the holder may be movably connected to the body of the apparatus, for example by means of a rail guide, and the first member may be connected to the second member, for example, by means of a spring connection. The second member is movable relative to the body of the apparatus, and the first member is movable relative to the body of the apparatus and also relative to the second member.

Preferably, the first member and the second member of the holder are connected by a movable connection comprising at least one spring.

Further, the holder comprises a chamfer of the holder, and the body of the apparatus comprises a chamfer of the body. Preferably, the chamfer of the holder is located on its second part, which is movably connected to the first part via a return spring connection and comprises the discharge element. The chamfer of the body is preferably located at the point where the holder is slid into the body of the apparatus.

Preferably, when the holder slides out from the body of the apparatus, the chamfer of the holder and the chamfer of the body are not in contact with each other. The first and the second part of the holder are in the first position, meaning they are spaced apart at the maximum range of the spring connection; i.e., the return springs are tensioned in the initial position. In the first position, the discharge element does not extend into the space for the placement of the capsule. When the holder is slid into the body of the apparatus, the chamfer of the holder and the chamfer of the body are in contact with each other. Here, a sliding motion of the chamfer of the holder along the chamfer of the body occurs, causing the first and the second part of the holder to be brought closer to each other into the second position until they come into contact, i.e., the return springs are compressed. In the second position, the discharge element extends into the space for the placement of the capsule.

The injection element preferably comprises at least one injection needle, and/or the discharge element comprises at least one discharge needle.

The injection needles and the discharge needles are preferably hollow.

The injection element comprises preferably two injection needles. The injection needles are preferably located on the body of the apparatus at the point where the holder is slid in and are oriented in a horizontal direction. The injection needles are an opening of the conduit for guiding the liquids from the supply bottles into the capsule. Preferably, the discharge element comprises two discharge needles. The discharge needles are preferably located on the second part of the holder, which is movably mounted to the first part via a spring connection. The discharge needles are used for the discharge of the liquids from the capsule.

Preferably, the discharge needles comprise openings perpendicular to the longitudinal axis of the needles. This ensures that the beverage is perfectly mixed as it is discharged from the capsule.

The holder preferably comprises a mixing container for additional mixing of the beverage, wherein the mixing container is removably mounted to the holder.

Preferably, the mixing container may be removably mounted to the second part of the holder, for example, via a bayonet connection. Preferably, the discharge element, that is, for example, the discharge needles, may be placed in the mixing container. The discharge needles are therefore used to discharge the liquid from the capsule into the mixing container, where the liquid is further mixed by a swirling motion. The mixing container further comprises a discharge opening for the discharge of the finished mixed beverage into a prepared glass. The bayonet connection of the mixing container to the holder allows for easy removal of the mixing container, for example, for washing purposes.

Therefore, the capsule piercing mechanism preferably works as follows:
When the holder is slid out from the body of the apparatus, the first part and the second part are in the first position. When the holder is slid into the body of the apparatus, the first and the second parts are in the second position.

The holder is slid out from the body of the apparatus. The first part of the holder is located on the top side of the holder and comprises a space for the placement of the capsule, and the second part is located on the bottom side of the holder and comprises the chamfer of the holder and the mixing container with the discharge needles and the discharge opening. The capsule is inserted into the space for housing the capsule in the first part of the holder. The holder is slid into the body of the apparatus in the horizontal direction. This causes the capsule to be pierced in the horizontal direction by the injection needles, allowing the liquids from the reservoirs to be injected into the capsule. By mixing the liquids from the reservoirs with the content of the capsule in a swirling motion, the desired beverage is formed inside the capsule. When the holder is slid into the body of the apparatus, the chamfer of the holder simultaneously comes into contact with the chamfer of the body. The chamfer of the holder slides along the chamfer of the body, causing the second member with the mixing container and the discharge needles to be lifted upward toward the first member and the return springs to be compressed. When the holder is fully slid into the body of the apparatus, the first and the second parts of the holder come into contact, and the discharge needles extend into the space for the placement of the capsule and pierce the capsule from below in a vertical direction.

The finished beverage from the capsule then flows by gravity from the capsule into the mixing container, where it is further mixed by a swirling motion. The beverage flows out of the mixing container through the discharge opening into the prepared glass. Once the beverage has been prepared, the holder is again slid out of the body of the apparatus, thereby causing the return springs to be tensioned back to their initial length of spacing of the first and second parts of the holder to the first position. The discharge needles are concealed in the second member of the holder when in the first position. Once the beverage is ready, the mixing container may be quickly and simply removed from the second part of the holder using the bayonet connection, rinsed with water, and returned back into the apparatus.

The described piercing mechanism has an advantage in that the capsule is pierced simply by sliding the holder into the body of the apparatus, and no additional mechanical actions, for example, snapping a lever, etc., are required to pierce the capsule and prepare the beverage.

The device for the preparation of beverages preferably comprises several reservoirs for different kinds of alcohol, for example clear spirits (for example, vodka, gin, etc.) and dark spirits (for example, rum, whiskey, etc.). Further, the device may comprise a reservoir for water, or air. The reservoirs are connected to the conduit for guiding the liquids, or air. The connection of all the reservoirs to the conduit comprises corresponding valves. All the liquids may be supplied into the capsule simultaneously or sequentially, depending on the preparation requirements for the specific beverage.

The injection element preferably comprises a first injection needle and a second injection needle.

The device for the preparation of beverages using a capsule preferably comprises at least two reservoirs for supply liquids and at least two separate mixing conduits.

Preferably, the first reservoir is connected to the first mixing conduit and the first injection needle, and the second reservoir is connected to the second mixing conduit and the second injection needle.

Preferably, the device comprises at least two separate mixing conduits, for example in the following configuration: Two reservoirs for clear spirits, for example vodka and gin, are connected to the first mixing conduit, which opens into the first injection needle. Two reservoirs for dark spirits, for example rum and whiskey, are connected to the second mixing conduit, which is separate from the first mixing conduit and opens into the second injection needle. The opening of the first mixing conduit and the opening of the second mixing conduit each comprise a separate flowmeter, pump, and corresponding valves. This configuration offers the advantage of separating the clear spirits and the dark spirits, thus reducing the risk that a beverage prepared with clear spirits will be unintentionally colored by residues of dark spirits that may have accumulated in the conduit.

The device preferably comprises a reservoir for water that is connected to both the first mixing conduit and the second mixing conduit.

Preferably, the device includes a reservoir for water that may be connected to both the first and the second mixing conduits. This configuration offers the following advantages: The alcohol supplied to both injection needles can be diluted with water in the desired ratio. After preparing a beverage, the mixing conduit can be flushed with a dose of clean water to prevent unwanted mixing of alcohols.

The device further preferably comprises a reservoir for compressed air, which serves for compensation of pressure in all parts of the conduit, and after preparation of the beverage, the air may be used to purge the conduit of accumulated liquid residues.

The device further preferably comprises a cooling unit for the cooling of liquids.

The device further preferably comprises a display device, for example an LCD screen. The screen preferably selectively displays the amounts of the liquids in the reservoirs, the temperature of the liquids, a notification regarding the kind of the prepared beverage, notification regarding completion of the preparation of the beverage, notification regarding flushing of the conduit.

The device further preferably comprises an acoustic signaling. The acoustic signaling is preferably triggered, for example, when the apparatus is turned on or off, after a beverage has been prepared, and during flushing of the conduit.

Beverage capsules are preferably inserted into the device. A capsule for use in the described device preferably comprises at least one weakening for the injection element and at least one weakening for the discharge element.

The capsule is preferably produced from a material that can be pierced by the injection element, for example from polymer plastic. The capsule may comprise a weakening for the injection element and a weakening for the discharge element, which are points where the material of the capsule is thinned to facilitate the penetration of the injection and discharge elements into the capsule.

Preferably, the capsule shape matches the space for the placement of the capsule. Preferably, the capsule may be produced from a compostable material.

Preferably, the capsule comprises a code for identifying the beverage, for example a barcode, RFID tag, QR code, etc. The code comprises information about the amount and kind of liquids needed to prepare the beverage. For example, 0.02 L of vodka, 0.02 L of gin, and 0.05 L of water. The capsule may also comprise ingredients for the preparation of non-alcoholic beverages, for example fruit components and flavorings. In this case, only water is supplied to the capsule through the conduit.

Preferably, the device comprises a code reader, for example for barcodes, RFID tags, QR codes, and so on.

Preferably, the device comprises an electronic control unit, for example a microcontroller, for controlling the automatic preparation of the beverages.

The control unit is preferably communicatively connected to the individual valves, pumps, flowmeters, the cooling unit, the LCD screen, the code reader, the limit switch, and possibly other electronic components of the device. The control unit preferably controls the preparation of the beverage, for example, in the following manner.

Once the holder with the capsule is fully slid into the body of the apparatus, the code reader scans the code on the capsule. Information from the code regarding the amount and kind of the liquids is sent to the control unit. The control unit issues commands to the individual valves and pumps to pump the liquids into the conduit and the injection element. Simultaneously, a notification is displayed on the screen, for example "Your beverage is being prepared". The flowmeter communicates with the control unit and monitors the amount of the liquids pumped. Once the desired amount of the liquids has been reached, as measured by the flowmeter, the control unit stops pumping the liquids. Based on a command of the control unit, a notification such as "Your beverage is ready" is displayed on the screen. Subsequently, after a predefined time interval, the flushing of the conduit with clean water is initiated, wherein the notification "Conduit flushing" will be displayed on the screen.

### Description of Drawings

A summary of the invention is further clarified using exemplary embodiments thereof, which are described with reference to the accompanying drawings, in which:
- fig. 1: shows the capsule
- fig. 2: shows a section through the holder and the body of the apparatus
- fig. 3: shows the holder in a top view
- fig. 4: shows the process of inserting the holder into the body of the apparatus and piercing the capsule, where A represents the full sliding out and C represents the full sliding in
- fig. 5: shows the second member of the holder with a spring connection
- fig. 6: shows the first member and the second member of the holder
- fig. 7: shows a block diagram of the guiding of the liquids in the device
- fig. 8: shows the directions of the injection of the liquids into the capsule - I and the discharge of the liquids from the capsule - O.

### Exemplary Embodiments of the Invention

The invention will be further clarified using exemplary embodiments with reference to the corresponding drawings.

### First exemplary embodiment:

The first exemplary embodiment is a device for automatic production of alcoholic and non-alcoholic beverages using capsules 4. The device comprises a body 5 of the apparatus, a holder 1 for the placement of a capsule 4, liquid reservoirs, conduit for guiding the liquids, an injection element 52 comprising two injection needles 521, 522 for guiding the liquids into the capsule 4, and a discharge element 36 comprising two discharge needles 361 for the discharge of the liquids from the capsule 4.

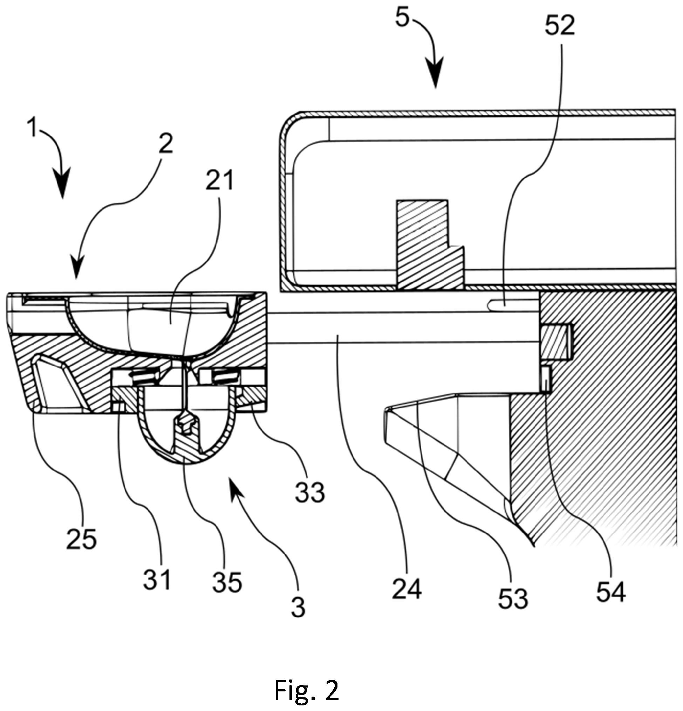

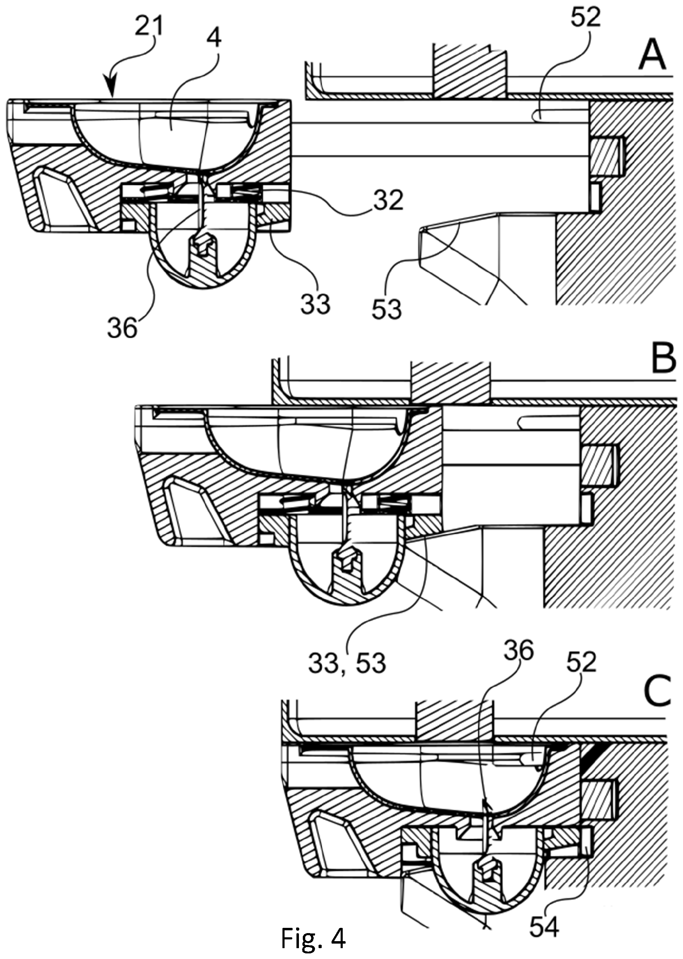

The device according to the first embodiment comprises the body 5 and the holder 1 for the placement of the capsule 4 (fig. 2). The body 5 of the apparatus and the holder 1 together form a mechanism for piercing the capsule 4 (figs. 2 and 4). The holder 1 is slidably connected to the body 5 of the apparatus via a sliding rod 24, which is slidingly slidable within an opening in the body 5 of the apparatus. Therefore, the holder 1 slides in and out relative to the body 5 of the apparatus like a drawer.

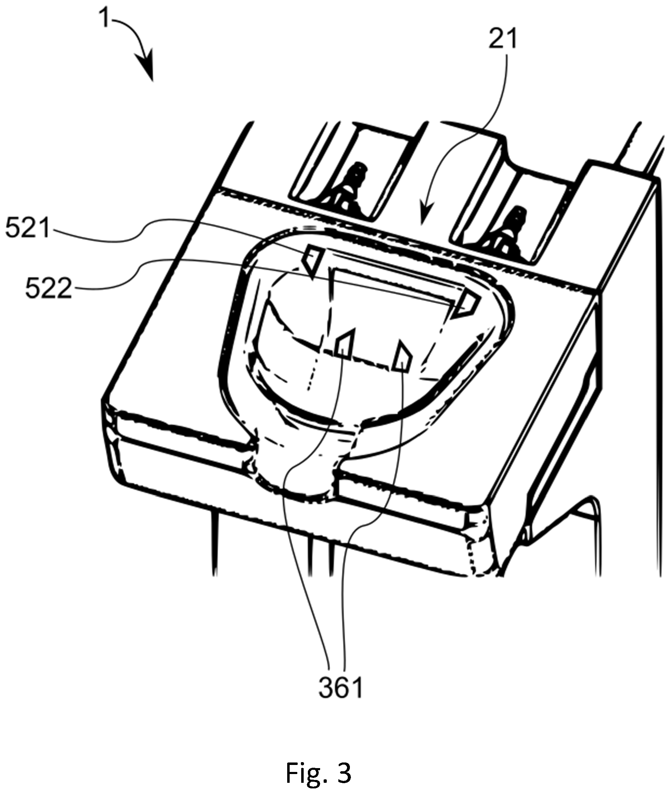

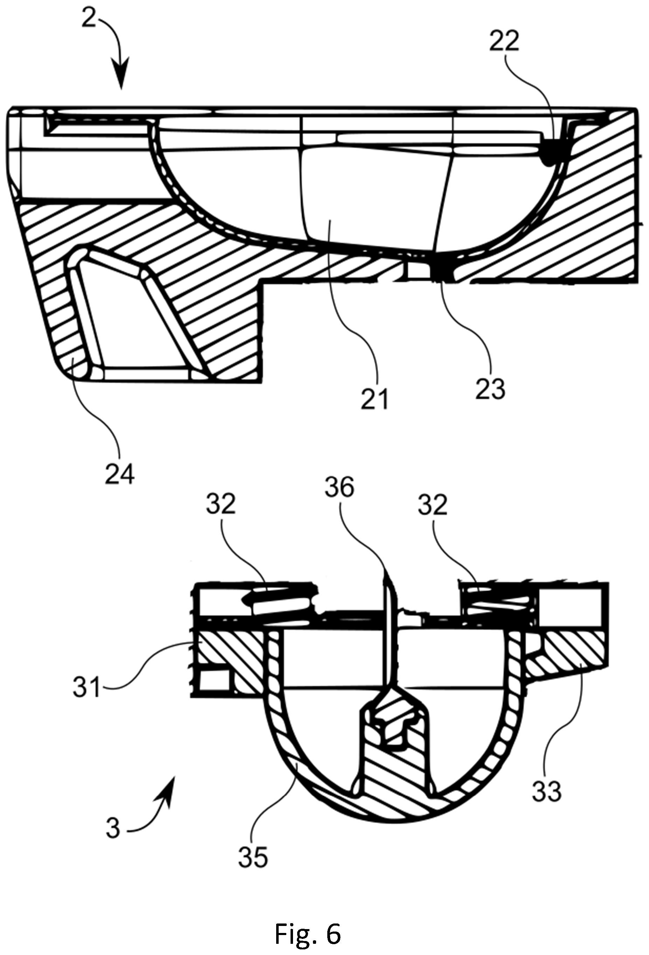

The holder 1 comprises the first member 2 and the second member 3 (fig. 6). The first member 2 of the holder 1 forms its top part (figs. 3 and 6). It comprises a space 21 for housing the capsule 4, which matches the shape of the capsule 4. Therefore, once inserted, the capsule 4 fills the entire space 21 for housing the capsule 4. The first member 2 also comprises two openings 22 for the injection element 52, i.e., for the first injection needle 521 and the second injection needle 522, and two openings 23 for the discharge element 36, i.e., for the first and second discharge needles 361. The first member 2 is further connected to the sliding rod 24, thereby ensuring a slidable motion relative to the body 5 of the apparatus. The holder 1 further comprises a handle 25, which is used for gripping the holder 1 by hand and to slide it out and in.

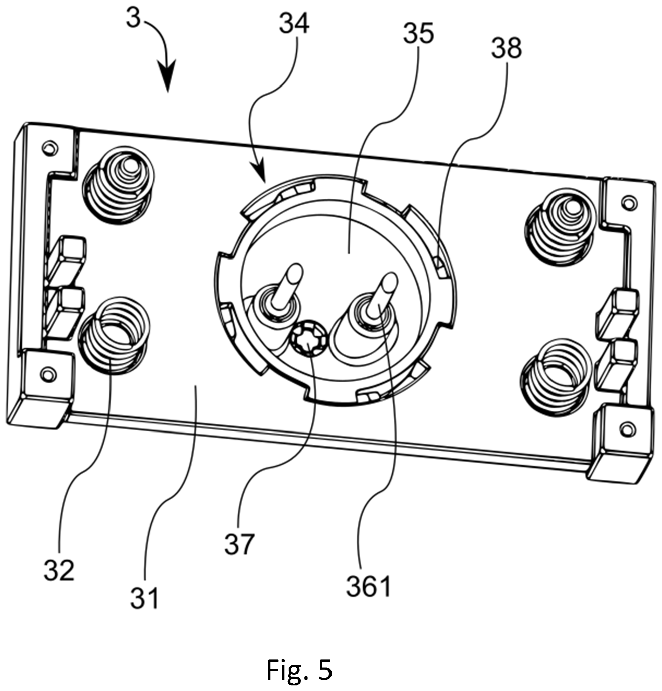

The holder 1 further comprises the second member 3, which is movably connected to the first member 2 (figs. 5 and 6). The movable connection is implemented by means of four return springs 32, which maintain a certain distance between the first member 2 and the second member 3 in the initial tensioned position, and when the springs 32 are compressed, the first member 2 and the second member 3 are brought closer together. If the springs 32 are tensioned and the members of the holder 1 are spaced apart, it is the first position of the members (fig. 4A). If the springs 32 are compressed and the members of the holder 1 are brought close together, it is the second position of the members (fig. 4C). Therefore, the second member 3 of the holder 1 comprises a movable pad 31 with return springs 32. A mixing container 35, which comprises the discharge element 36 (fig. 5), is also removably mounted to the movable pad31.

In the first embodiment, the discharge element 36 forms two discharge needles 361. In the first position of the members, the discharge needles 361 do not extend into the space 21 for housing the capsule 4; i.e., the discharge needles 361 do not pierce the capsule 4 (fig. 4A). In the second position of the members, the discharge needles 361 extend into the space 21 for housing the capsule 4; i.e., the discharge needles 361 do pierce the capsule 4 (fig. 4C). The mixing container 35 is mounted to the second member 3 using a bayonet mounting 38 in the opening 34 for the mixing container 35. The mixing container 35 can be removed, rinsed, and mounted back to the holder 1.

The second member 3 of the bracket 1 further comprises a chamfer 33 of the bracket 1 (fig. 6). The body 5 of the apparatus comprises a chamfer 53 of the body 5 (figs. 2 and 4). The chamfer 33 of the holder 1 is an inclined surface that, when the holder 1 is slid into the body 5 of the apparatus, comes into contact with the complementary chamfer 53 of the body 5 (fig. 4B), and the mutual slidable motion of these inclined surfaces causes the second member 3 of the holder 1 to be lifted and brought closer to the first member 2 of the holder 1 until they come into contact (fig. 4C). The first member 2 and the second member 3 thus move from the first position to the second position, and the discharge needles 361 move through the openings 23 for the discharge element 36 into the space 21 for housing the capsule 4, where they pierce the capsule 4 and discharge the liquid from it (figs. 4 A, B, C).

Simultaneously, by sliding the holder 1 into the body 5 of the apparatus, the capsule 4 is pierced by the injection needles 521, 522, and the liquid is injected into the capsule 4 (fig. 4 A, B, C). The body 5 of the apparatus comprises the injection element 52, which comprises two injection needles 521, 522 that penetrate the capsule 4 through the openings 22 for the injection element 52 in the holder 1. The injection needles 521, 522 are placed horizontally at the point where the holder 1 is slid in. The body 5 of the apparatus simultaneously comprises a limit switch 54 at the point of sliding in. The limit switch 54 blocks the valves on the conduit for the supply of the liquids into the capsule 4. The valves are unblocked, and the supply of the liquids into the capsule 4 is permitted only when the drawer of the holder 1 is fully slid into the body 5 of the apparatus and thus contacts the limit switch 54.

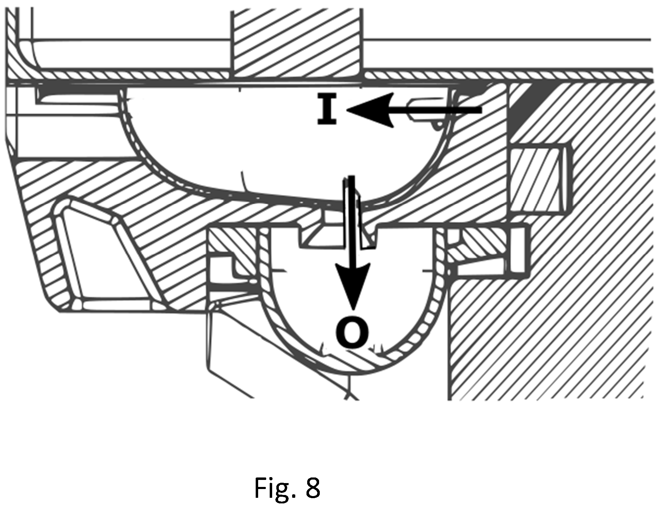

In the first embodiment, the capsule 4 piercing mechanism can be simply described as follows: Piercing of the capsule 4 with the injection needles 521, 522 for the injection of the liquids into the capsule 4 occurs in the horizontal direction I as the holder 1 is slid into the body 5 of the apparatus. Simultaneously, the piercing of the capsule 4 by the discharge needles 361 for the discharge of the beverage from the capsule 4 occurs in the vertical direction O, and is achieved by sliding the chamfer 33 of the holder 1 onto the chamfer 53 of the body 5 and lifting the discharge needles 361 into the capsule 4. The direction of the injection I and the direction of the discharge O are shown in fig. 8.

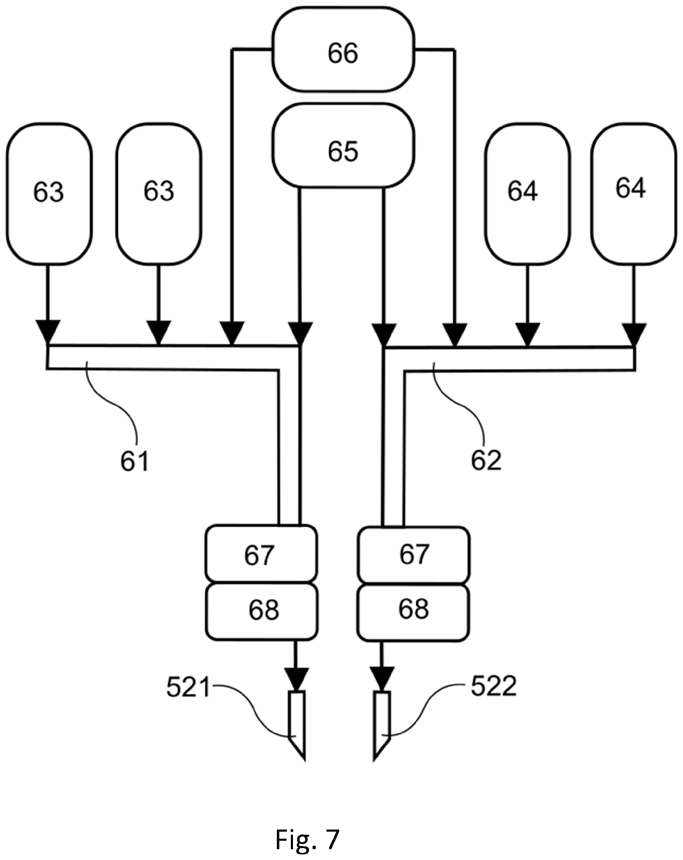

In the first embodiment, the guiding of the liquids in the device is as follows: The body 5 of the apparatus has four reservoirs for alcohol connected thereto, of which the first two reservoirs 63 are for clear spirits, i.e., vodka and gin; and the other two reservoirs 64 are for dark spirits, i.e., rum and whiskey; the reservoir 65 for water, and the reservoir 66 for compressed air. The device comprises two separate mixing conduits for guiding the liquids and air, the first mixing conduit 61 and the second mixing conduit 62. Each mixing conduit comprises a flowmeter 68 and a pump 67 and opens into a separate injection needle 521, 522. The first mixing conduit 61 opens into the first injection needle 521, and the second mixing conduit 62 opens into the second injection needle 522. The first reservoirs 63 for clear spirits, the reservoir 65 for water, and the reservoir 66 for air are connected to the first mixing conduit 61. The second reservoirs 64 for dark spirits, the reservoir 65 for water, and the reservoir 66 for air are connected to the second mixing conduit 62. Electronically operable valves are installed at the corresponding points along the conduit. A block diagram of the guiding of the liquids is displayed in fig. 7. This configuration prevents the unintended mixing of clear and dark spirits in the conduit, simultaneously allowing the conduit to be flushed with water and the pressure in the conduit to be equalized using the compressed air.

The device according to the first embodiment further comprises a barcode reader, valves for the guiding of the individual liquids and air, the flowmeter 68, and the pump 67 for the first mixing conduit 61, the flowmeter 68 and the pump 67 for the second mixing conduit 62, and an electronic control unit in the form of a microcontroller for communicating with all these components of the device.

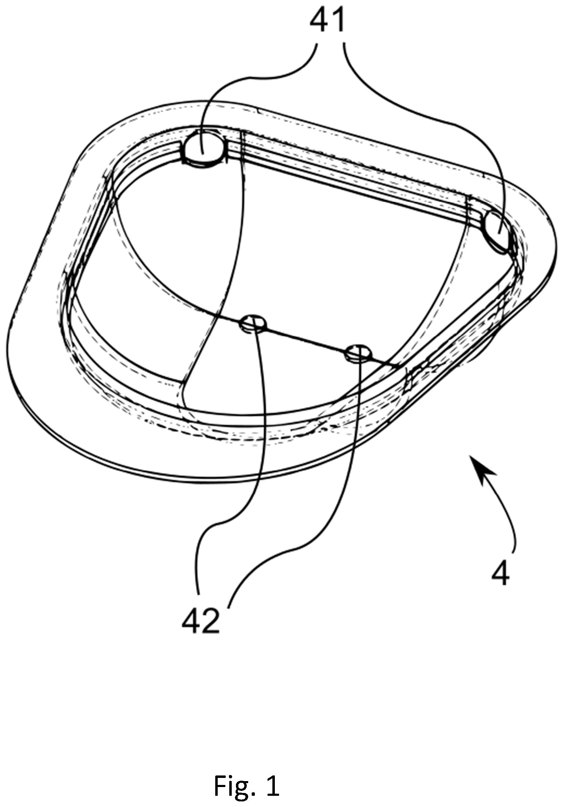

In the first embodiment, the capsules 4 are inserted into the device (fig. 1), with shape that precisely matches the space 21 for housing the capsule 4 in the first member 2 of the holder 1. The walls of the capsule 4 include a weakening 42 for the discharge element 36, i.e., two thinned points for the discharge needles 361, and a weakening 41 for the injection element 52, i.e., two thinned points for the injection needles 521, 522. The capsules 4 according to the first embodiment contain a liquid mixture of ingredients for the preparation of various beverages. The capsule 4 further comprises a barcode on the cap that contains information about the amount of the liquids needed to prepare the beverage and the order in which they should be injected into the capsule 4. The information from the barcode is read by the reader and sent to the control unit. Based on the information from the barcode, the control unit controls the amount and the order of the liquids supplied into the capsule 4.

The preparation of the beverage according to the first embodiment is clarified in more detail using the example of the mixed drink "Citrus punch", which contains 0.02 L of vodka, 0.02 L of rum, 0.16 L of water, and the content of the capsule 4 "Citrus Punch," which comprises orange and lime concentrate and flavors. The holder 1 of the capsule 4 slides out of the body 5 of the apparatus. The capsule 4 "Citrus Punch" is inserted into the space 21 for housing the capsule 4. The holder 1 with the capsule 4 is slid into the body 5 of the apparatus, causing the capsule 4 to be pierced horizontally by the injection needles 521, 522 and the capsule 4 to be pierced vertically by the discharge needles 361. Subsequently, the barcode reader reads the code on the cap of the capsule 4 containing information that 0.02 L of vodka should first be injected into the capsule 4 simultaneously using the first needle 521, followed by 0.02 L of rum using the second injection needle 522, and then simultaneously 0.08 L of water using the first injection needle 521 and 0.08 L of water using the second injection needle 522, and sends this information to the control unit. The limit switch 54 simultaneously checks that the holder 1 is fully slid in, i.e., that it is in contact with the limit switch 54, and sends this information to the control unit. The control unit subsequently issues commands to the corresponding valves and pumps 67, causing the required liquids to be dispensed into the capsule 4 in the specified order. The amount of the liquids is controlled by the flowmeters 68, which are also communicatively connected to the control unit. When the desired volume of the liquids is reached, the valves close and the pumps 67 are turned off. The liquids flow through the capsule 4 and mix with its content. The liquids are discharged from the capsule 4 by the discharge needles 361 into the mixing container 35, where the beverage is perfectly mixed. The beverage flows out of the mixing container 35 through the discharge opening 37 into the prepared glass.

The device according to the first embodiment further comprises a screen and acoustic signaling. The screen displays the notifications "Beverage is being prepared", "Beverage is ready", "Conduit flushing".

### Second exemplary embodiment:

In the second exemplary embodiment, the first member 2 of the holder 1, with the space 21 for housing the capsule 4 is on the top side of the holder 1, and the second member 3 of the holder 1 with the discharge element 36 is on the bottom side of the holder 1, just as in the first embodiment. The second embodiment differs from the first in that the second member 3 of the holder 1 is slidably connected to the body 5 of the apparatus via a rail guide, the first member 2 of the holder 1 is movably connected to the second member 3 by means of four return springs 32, and the chamfer of the holder 33 is located on the first member 2. When the holder 1 is slid into the apparatus, the first member 2 with the capsule 4 drops downward, and the capsule 4 is pierced by the discharge element 36 of the second member 3.

### List of Reference Signs

| | | | |
|---|---|---|---|
| 1 - | Holder of the capsule | 4 - | Capsule |
| 2 - | First member | 41 - | Weakening for the injection element |
| 21 - | Space for housing the capsule | 42 - | Weakening for the discharge element |
| 22 - | Opening for the injection element | | |
| 23 - | Opening for the discharge element | 5 - | Body of the apparatus |
| 24 - | Sliding rod | 52 - | Injection element |
| 25 - | Handle | 521 - | First injection needle |
| 3 - | Second member | 522 - | Second injection needle |
| 31 - | Movable pad | 53 - | Chamfer of the body |
| 32 - | Spring | 54 - | Limit switch |
| 33 - | Chamfer of the holder | 61 - | First mixing conduit |
| 34 - | Opening for the mixing container | 62 - | Second mixing conduit |
| 35 - | Mixing container | 63 - | First reservoir |
| 36 - | Discharge element | 64 - | Second reservoir |
| 361 - | Discharge needle | 65 - | Reservoir for water |
| 37 - | Discharge opening | 66 - | Reservoir for air |
| 38 - | Bayonet mounting | 67 - | Pump |
| | | 68 - | Flowmeter |

## Claims

1. A device for the preparation of beverages using a capsule (4), wherein the device comprises a body (5) of the apparatus and a holder (1) for the placement of the capsule (4), which is movably connected to the body (5) of the apparatus, **characterized in that:**
. the body (5) of the apparatus comprises an injection element (52) for the injection of a liquid into the capsule (4), and the holder (1) comprises a discharge element (36) for the discharge of the liquid from the capsule (4), wherein the line defined in the direction of the injection of the liquid into the capsule (4) and the line defined in the direction of the discharge of the liquid from the capsule (4) are non-parallel, wherein
a. the holder (1) comprises a first member (2) including a space (21) for housing the capsule (4) and a second member (3), wherein the discharge element (36) is part of the second member (3), wherein the first member (2) or the second member (3) comprises a chamfer (33) of the holder (1), wherein the body (5) of the apparatus comprises a chamfer (53) of the body (5) for contact with the chamfer (33) of the holder (1), wherein
b. the first member (2) and the second member (3) are connected by a movable connection and are movable relative to each other between a first position and a second position, wherein in the first position, the discharge element (36) does not extend into the space (21) for housing the capsule (4), and in the second position, the discharge element (36) does extend into the space (21) for housing the capsule (4).

2. The device for the preparation of beverages using the capsule (4) according to claim 1, **characterized in that** the injection element (52) comprises at least one injection needle (521, 522) and/or the discharge element (36) comprises at least one discharge needle (361).

3. The device for the preparation of beverages using the capsule (4) according to claims 1 or 2, **characterized in that** the holder (1) is connected to the body (5) of the apparatus slidably and non-rotatably.

4. The device for the preparation of beverages using the capsule (4) according to any one of the preceding claims, **characterized in that** the first member (2) of the holder (1) and the second member (3) of the holder (1) are connected by a movable connection comprising at least one spring (32).

5. The device for the preparation of beverages using the capsule (4) according to any one of the preceding claims, **characterized in that** the holder (1) comprises a mixing container (35) for additional mixing of the beverage, wherein the mixing container (35) is removably mounted to the holder (1).

6. The device for the preparation of beverages using the capsule (4) according to any one of the preceding claims, **characterized in that** the injection element (52) comprises a first injection needle (521) and a second injection needle (522).

7. The device for the preparation of beverages using the capsule (4) according to claim 6, **characterized in that** it comprises at least two reservoirs (63, 64) for supply liquids and at least two separate mixing conduits (61, 62).

8. The device for the preparation of beverages using the capsule (4) according to claim 7, **characterized in that** the first reservoir (63) is connected to the first mixing conduit (61) and the first injection needle (521), and the second reservoir (64) is connected to the second mixing conduit (62) and the second injection needle (522).

9. The device for the preparation of beverages using the capsule (4) according to claim 7 or 8, **characterized in that** it comprises a reservoir (65) for water connected to both the first mixing conduit (61) and the second mixing conduit (62).
